# EUROPÄISCHE PATENTSCHRIFT

(11) **EP 2 088 017 B1**
(45) Veröffentlichungstag und Bekanntmachung des Hinweises auf die Patenterteilung: **16.06.2010**
(21) Anmeldenummer: 09159704.7
(22) Anmeldetag: 28.07.2006
(51) Int. Cl.: B60J 1/16

(54) **Schiebefensterbaugruppe für ein Kraftfahrzeug**
Sliding window assembly for automotive vehicle
Module de fenêtre coulissante pour véhicule automobile

(30) Priorität: 29.07.2005 DE 102005036360
(43) Veröffentlichungstag der Anmeldung: 12.08.2009
(62) Teilanmeldung aus: 06118145.9
(73) Patentinhaber: DURA Automotive Body and Glass Systems GmbH, 58840 Plettenberg (DE)
(72) Erfinder: Vogt, Burkhard, 58644 Iserlohn (DE); Gendorf, Ralf, 57413 Finnentrop (DE); Kraus, Jürgen, 58802 Balve (DE); Vornbäumen, Jens, 58762 Altena (DE)
(74) Vertreter: Bungartz, Klaus Peter

(56) Entgegenhaltungen:
- EP-A- 1 595 727
- WO-A-2007/030459
- DE-C2- 19 655 079

## Beschreibung

Die Erfindung betrifft eine Schiebefensterbaugruppe für ein Kraftfahrzeug, wobei die Schiebefensterbaugruppe zumindest ein feststehendes Flächenelement und zumindest ein relativ zum feststehenden Flächenelement bewegliches Schiebefenster aufweist, das Schiebefenster im geschlossenen Zustand außenseitig bündig in dem Flächenelement unter Bildung einer weitestgehend glatten und optisch ebenen Außenfläche eingelassen ist, das Flächenelement zumindest zum Teil von einem Rahmenmodul gebildet ist, das Rahmenmodul zur Bildung der Außenfläche eine außenseitig angeordnete Rahmenplatte aufweist, die zumindest an ihrer Außenseite aus einem Kunststoffmaterial hergestellt ist, und innenseitig oder randseitig an der Rahmenplatte Funktionselemente angeordnet sind.

Um bei Kraftfahrzeugen auch in Fenstern, die zumindest in Teilen ortsfest zur Karosserie angeordnet sind, beispielsweise Seiten- oder Dachfenster, Lüftungsmöglichkeiten für den Innenraum zu schaffen, sind in letzter Zeit zunehmend Schiebefensteranordnungen eingesetzt worden. Dabei ist in erster Linie aus optischen Gesichtspunkten das bewegliche, die Öffnung des Fensters freigebende Schiebefenster derart bündig im feststehenden Flächenelement des Schiebefensters angeordnet, dass sich im geschlossenen Zustand eine im wesentlichen ebene, optisch einflächige Außenfläche ergibt.

Rahmenmodule für Schiebefensteranordnungen dieser Art sind bekannt. Die EP 0 968 862 offenbart ein Schiebefenster mit einem dem Rahmenmodul entsprechenden Blendrahmen. Der Blendrahmen bildet gemeinsam mit einer seitlich zu diesem angeordneten feststehenden Glasscheibe eine Ausnehmung, in die ein bewegliches Fenster eingelassen ist. Der Blendrahmen kann ebenfalls aus Kunststoff ausgebildet sein und weist ferner auf seiner Innenseite an die Innenseite angeschweißte oder mit dieser verklebte Führungsschienen auf.

Die US 5,809,706 beschreibt eine Schiebefensterbaugruppe, bei der eine feststehende Platte als Flächenelement bündig mit der Karosserie in eine Karosserieausnehmung eingesetzt ist. Mit der Innenseite der feststehenden Platte sind Funktionselemente in Form von Führungsschienen verklebt. Verlängerungen dieser Führungsschienen können dabei bis in den Randbereich der feststehenden Platte ragen und zwischen der Karosserie und der feststehenden Platte verklebt sein, um im Falle eine Unfalls die bewegliche Platte trotz des Zerberstens der feststehenden Platte in den Führungsschienen halten zu können. Darüber hinaus ist vorgesehen, dass die feststehende Platte, sofern sie aus mehreren Elementen zusammengesetzt ist, auch aus anderen Materialen als Glas hergestellt sein kann.

Die bekannten Schiebefensterbaugruppen bringen jedoch eine Reihe von Problemen mit sich. Zum einen ist die Verwendung von Glas problematisch. Dessen Herstellung und Ver- bzw. Bearbeitung ist relativ teuer. Lochartige Ausnehmungen in Glasplatten einzubringen ist fertigungstechnisch schwierig und daher kostspielig. Geforderte Toleranzen und die gewünschte Glasqualität können regelmäßig nur schwer eingehalten werden. Ferner sind die Materialeigenschaften des Glases zwar hinsichtlich der Durchsichtigkeit, Härte und Kratzfestigkeit sehr vorteilhaft, jedoch birgt die Brüchigkeit insbesondere bei einem Unfall schwer zu kalkulierende Risiken und Verletzungsgefahren. Hiervon abgesehen ist Glas relativ schwer, was einem konsequenten Leichtbau entgegenwirkt. Dies hat dazu geführt - wie auch dem Stand der Technik zu entnehmen ist - das Flächenelement teilweise aus einem Kunststoffbauteil zu fertigen.

Glas lässt sich ferner für den hier relevanten Zweck sinnvoll nur durch Kleben mit anderen Materialien dauerhaft und sicher verbinden. Die für eine Schiebefensterbaugruppe notwendigen weiteren Funktionselemente wie Wasserablauf, Dichtungen, Führungsschienen etc. werden daher im genannten Stand der Technik ausschließlich mittelbar oder unmittelbar mit dem feststehenden Flächenelement oder der Karosserie verklebt, ohne dabei die technischen Möglichkeit der Kunststoffverarbeitung konsequent zu verwirklichen. Dies führt in der Fertigung zu weiteren notwendigen Fertigungsschritten, die das Endprodukt verteuern. Auch die Formgebung ist bei Glas deutlich schwieriger. Eine andere Gestaltung als eine scheibenartige bzw. flächige Gestaltung eines Glasbauteils ist schwierig zu erzielen und aus Kostengründen oft nicht zu akzeptieren. Gleiches gilt für das Anbringen von Bohrungen oder Gewinden im Glas oder die Integration von Bauteilen im Glas, das durch dessen hohe Verarbeitungstemperaturen beispielsweise das Eingießen von Kunststoffbauteilen oder Dichtungen nicht erlaubt.

Der DE 196 55 079 C2 ist die Möglichkeit zu entnehmen, Fenster aus Kunststoff zu fertigen und bestimmte Funktionselemente schon im Rahmen des Spritzgießprozesses an der Fensterbaugruppe auszubilden, ohne dass die DE 196 55 079 C2 dabei jedoch auf spezifische Problemstellungen bei Schiebefenstern eingeht.

Aufgabe der Erfindung ist es daher, die Konstruktion und die Fertigung von Schiebefensterbaugruppen zu vereinfachen und kostengünstiger zu gestalten. Es sollen ferner weitere Vorteile wie erhöhte Insassensicherheit im Crashfall, Gewichtsreduzierung, Bauraumverringerung, Materialeinsparungen oder auch eine optische ansprechendere Erscheinung erzielt werden. Insbesondere sollen unter Ausnutzung der durch die Kunststoffverarbeitung eröffneten Möglichkeiten die konstruktiven Gestaltungsmöglichkeiten an einem mit einem Schiebefenster ausgestatteten Fahrzeug zu erhöht werden.

Diese Aufgabe wird nach der Erfindung durch die im kennzeichnenden Teil der Patentansprüche 1 und 15 genannte Merkmale gelöst.

Es ist somit möglich, auf ein Ankleben oder Anschweißen eines getrennt zu fertigenden Funktionselementes zumindest an dem Teil des Flächenelements, das aus Kunststoff hergestellt ist, zu verzichten. Funktionselement und Rahmenplatte bilden eine Einheit, die in einem Fertigungsschritt hergestellt wird. Es wird eine kompakte Baugruppe mit geringem Bauraum geschaffen, die nicht nur aufgrund des im Verhältnis zu Glas leichteren Kunststoffs gewichtsreduziert ist. Auch Materialeinsparungen gewährleisten eine Gewichtsreduktion, da das Verkleben getrennter Funktionselemente an die Rahmenplatte in der Regel aufwendigere Bauteile erfordert, die durch die Integration der Funktionselemente an bzw. in die Rahmenplatte entfallen oder konstruktiv vereinfacht können.

Ein weiterer Vorteil ist die Insassensicherheit. Bei der Verwendung von Glas bzw. bei dem Verkleben oder Verschweißen der Funktionselemente mit der Rahmenplatte besteht möglicherweise die Gefahr, dass sich einzelne Teile im Falle von Extremkräften von der Rahmenplatte lösen, in den Innenraum geschleudert werden und Insassen verletzen. Sind die Funktionselemente jedoch unmittelbar an die Innenseite der Rahmenplatte angeformt und nicht lediglich angeklebt, gewährleistet die so gebildete Schiebefensterbaugruppe eine erhöhte Sicherheit. Hinzu kommt, dass durch die konsequente Verwendung von geeignetem Kunststoff, der im Gegensatz zu Glas ohnehin eine bessere Schlagzähigkeit und ein günstigeres Bruchverhalten aufweist, die Sicherheit weiter erhöht wird.

Unmittelbar an der Rahmenplatte anformen bedeutet in diesem Zusammenhang, dass die Funktionselemente nicht als zunächst eigenständiges getrenntes Bauteil nach Fertigstellung der Rahmenplatte durch Kleben oder Anschweißen an dieser angebracht werden. Vielmehr sollen die Funktionselemente innerhalb des Fertigungsprozesses der Rahmenplatte an dieser angeordnet bzw. in diese integriert werden, in dem sie beispielsweise gleichzeitig mit dieser als integrales Bauteil gegossen, zumindest teilweise innerhalb der Rahmenplatte eingegossen, an diese angespritzt oder etwa mit dieser zusammenlaminiert werden.

Das Kunststoffmaterial der außenseitigen Rahmenplatte, das vorzugsweise ein Glas imitierendes Kunststoffmaterial ist, kann dabei beispielsweise ein PMMA oder ein ABS sein. Entscheidend ist dabei nicht, dass der Kunststoff durchsichtig ist, da bei Kraftfahrzeugen die herkömmlichen Glasscheiben in ihren Randbereichen zum optischen Verdecken von Klebestellen oder von Funktionselementen ebenfalls regelmäßig undurchsichtig sind. Vielmehr soll bevorzugt lediglich der optische Eindruck erweckt werden, dass es sich um Glas handele. Der Kunststoff kann also etwa auch durchgefärbt, lackiert oder anderweitig beschichtet sein. Dabei kommen insbesondere Beschichtungen in Betracht, die die Widerstandsfähigkeit der Oberfläche erhöhen.

Um die Insassensicherheit weiter zu erhöhen, kann vorgesehen sein, dass die Rahmenplatte außenseitig einen ersten Materialbereich, vorzugsweise aus einem Glas imitierenden Kunststoffmaterial, und innenseitig zumindest einen zweiten Materialbereich mit zum ersten Materialbereich unterschiedlichen Werkstoffeigenschaften aufweist. Das Glas imitierende Kunststoffmaterial der Außenseite der Rahmenplatte weist im Verhältnis zu Glas zwar eine bessere Schlagzähigkeit und günstigere Brucheigenschaften auf, stellt aber beispielsweise im breiten Spektrum der Kunststoffe immer noch einen eher brüchiges unelastisches Material dar. Um die Rahmenplatte weiter zu optimieren und auch das Anformen der Funktionselemente zu erleichtern, weist daher die Rahmenplatte bevorzugt innenseitig den zweiten Materialbereich auf. Dieser kann, da er nicht die Anforderungen der nach außen gerichteten Fläche erfüllen muss, andere, für die Innenseite geeignetere Materialeigenschaften aufweisen. Dies kann dadurch erreicht werden, dass beim Spritzgießen der Rahmenplatte die Materialeigenschaften der Außen- bzw. Innenseite durch unterschiedliche Abkühlkurven unterschiedlich beeinflusst werden. Es kann auch vorgesehen werden, dass erst nach Spritzgießen des ersten Materialbereichs das Werkzeug den Raum für den zweiten Materialbereich freigibt, so dass dieser nachgespritzt wird. Bei einer geeigneten Beschichtung der Außenseite kann auch die Beschichtung selbst den ersten Materialbereich bilden. Der zweite Materialbereich kann in sich wiederum aus unterschiedlichen Materialien bzw. Werkstoffen bestehen.

Eine alternative Ausgestaltung sieht vor, dass die Rahmenplatte des Rahmenmoduls zumindest zum Teil als Werkstoffverbund oder als Verbundwerkstoff hergestellt ist. Dies führt dazu, dass die Rahmenplatte die Werkstoffeigenschaften verschiedener Materialien in sich vereint den Anforderungen entsprechend optimal ausgelegt werden kann. Hierzu bietet sich als Materialverbund unter anderem eine Sandwichbauweise. Bei einer geeigneten Materialkombination ergeben sich im Hinblick auf die gesamte Rahmenplatte verbesserte Gesamteigenschaften.

Um die Sicherheit und die Bruchfestigkeit weiter zu erhöhen, ist eine Ausgestaltung vorteilhaft, bei der die Rahmenplatte einen faserverstärkten Materialbereich aufweist. Dies hat nicht nur den Vorteil einer weiteren Erhöhung der Stabilität und der Bruchsicherheit, sondern führt auch dazu, dass die Funktionselemente über die Fasern, sofern diese als Langfaserverstärkung in den mit der Karosserie verklebten Randbereich der Rahmenplatte ragen, ebenfalls mit der Karosserie verbunden sind. Selbst bei einem Bruch der Rahmenplatte werden die Funktionselemente im Crashfall daher nicht abgesprengt, sondern bleiben über die Fasern mit der Karosserie verbunden. Dies gilt umso mehr, falls die Funktionselemente innerhalb der Faserschicht einlaminiert sind. Es ist aber auch die Verwendung von Kurzfasern denkbar, mit denen beispielsweise das Kunststoffmaterial der Rahmenplatte vor einem Spritzgussprozess versehen sind.

Die gewünschte kompakte Schiebefensterbaugruppe wird insbesondere dadurch erzielt, dass die Funktionselemente an der Rahmenplatte innenseitig oder randseitig angespritzt sind. Sie können dabei sowohl unmittelbar als auch mittelbar angespritzt werden. Unmittelbar heißt in diesem Zusammenhang, dass die Funktionselemente direkt im selben Fertigungsschritt mit der Rahmenplatte spritzgegossen und so an dieser angeformt werden. Mittelbar bedeutet, dass für die Funktionselemente ein zweiter, vorzugsweise im gleichen Werkzeug stattfindender Spritzgussprozess initiiert wird, um für die Funktionselemente gegebenenfalls ein anderes für ihren Zweck geeigneteres Material vorzusehen. Es kann also sowohl eine Einkomponenten- als auch eine Mehrkomponententechnik angewandt werden. Dies kann beispielsweise dadurch erreicht werden, dass nach dem Spritzgießen der Rahmenplatte Gusskerne gezogen werden, in deren Raum dann das Material für die Funktionselemente gespritzt wird. Sofern die Rahmenplatte zwei Materialbereiche aufweist, die nacheinander gespritzt werden, so werden die Funktionselemente vorzugsweise an den zweiten Materialbereich unmittelbar oder mittelbar angespritzt.

Die Funktionselemente können auch zumindest teilweise innerhalb der Rahmenplatte angeordnet und von dem Material der Rahmenplatte umgeben sein, insbesondere von dem Material der Rahmenplatte umspritzt oder in diese einlaminiert sein. Werden etwa Dichtungsleisten oder andere Funktionselemente wie Stützprofile von der Rahmenplatte umgossen, sind diese auf einfachere und sicherere Weise mit dieser verbunden. Auch können Verstärkungseinlagen, insbesondere aus Metall, vorgesehen sein, die sowohl von dem Rahmenplattenmaterial als auch vom Material eines Funktionselements umgossen sind. Die Verbindung von Rahmenplatte und Funktionselement wird dadurch weiter erhöht. Solche Verstärkungseinlagen stellen in so fern ein eigenes unmittelbar an der Rahmenplatte angeformtes bzw. mittelbar an dieser angespritztes Funktionselement dar.

Eine Verstärkungseinlage als Funktionselement, insbesondere eine Metalleinlage, kann auch nur teilweise in der Rahmenplatte, insbesondere in deren zweiten Materialbereich, eingegossen sein. Dies ermöglicht es, weitere Bauteile, die beispielsweise aufgrund ihrer Komplexität nicht mittelbar oder unmittelbar an die Rahmenplatte angeformt werden können oder sollen, an die Metalleinlage anzustecken. Hierdurch werden weitere Verbindungstechniken wie Schraub- oder Klipsverbindungen ermöglicht, da die verstärkende Einlage bei geeignetem Material ohne weiteres belastbare Gewinde oder Schnapphaken aufnehmen kann. Auf ein Kleben oder Anschweißen kann verzichtet werden.

Funktionselemente können dabei unterschiedlichsten Zwecken dienen. So umfassen bevorzugt die Funktionselemente Führungsschienen, in denen das Schiebfenster geführt ist. Auch kann unmittelbar an das Rahmenelement eine Diebstahlschutzleiste angeformt werden, die das Eindringen in den Spalt zwischen Schiebefenster und Flächenelement mit einem Werkzeug oder das Eindrücken des Schiebefensters erschwert. Ferner bietet es sich an, an der Innenseite der Scheibe anfallendes Wasser, beispielsweise Kondens- bzw. Schwitzwasser oder von außen aufgrund von Undichtigkeiten durch die Dichtungen eindringendes Wasser, durch ein Wassermanagement, dass Mittel zum Ableiten des Wassers umfasst, zu sammeln und über einen Wasserablauf nach außen abzuleiten. So kann beispielsweise an das Rahmenelement eine Wasserauffangrinne angeformt sein, die das Wasser in der Rahmenplatte vorgesehenen Ablaufkanälen zuleitet, die es dann wiederum nach außen ableiten. Die Funktionselemente können ferner Mittel zum Anzeigen von Informationen, insbesondere Leuchtmittelanzeigen, oder Dichtelemente, insbesondere Dichtleisten, umfassen. Auch können Zierleisten vorgesehen sein, die in die Rahmenplatte integriert sind. Diese Zierleisten können auch außenseitig derart an der Rahmenplatte angeordnet sein, dass sie von außen sichtbar sind, beispielsweise um den Übergang von Karosserie zur Rahmenplatte optisch ansprechend zu gestalten. Auch ist es denkbar, an die Rahmenplatte Mittel zum Halten von Zusatzelementen wie Jalousien, Fliegengitter, Gardinen, Haltenetze für Kleingegenstände, Spiegel, Leselampen, Getränkehalter etc. anzuformen.

Ebenfalls zur Erfindung gehörig wird das Rahmenmodul selbst angesehen, das noch nicht zu einer Schiebefensterbaugruppe zusammengesetzt ist. Ferner sei erwähnt, dass die vorliegende Erfindung selbstverständlich nicht strikt auf die Anwendung bei seitlichen Schiebefensterbaugruppen beschränkt sein muss. Ebenfalls denkbar ist beispielsweise die Anwendung im Bereich eines Schiebedachs. Letztlich lässt sich der Erfindungsgedanke auch auf Schiebefensteranordnungen von anderen Fahrzeugen wie Züge, Schiffe und Flugzeuge oder auch auf den Heimbereich anwenden.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Fig. 1 eine schematische Gesamtansicht einer Schiebefensterbaugruppe,
Fig. 2 eine Schnittansicht eines unteren Übergangsbereichs von Schiebefenster und Rahmenmodul, und
Fig. 3 eine Schnittansicht eines seitlichen Übergangsbereichs von Schiebefenster und Rahmenmodul.

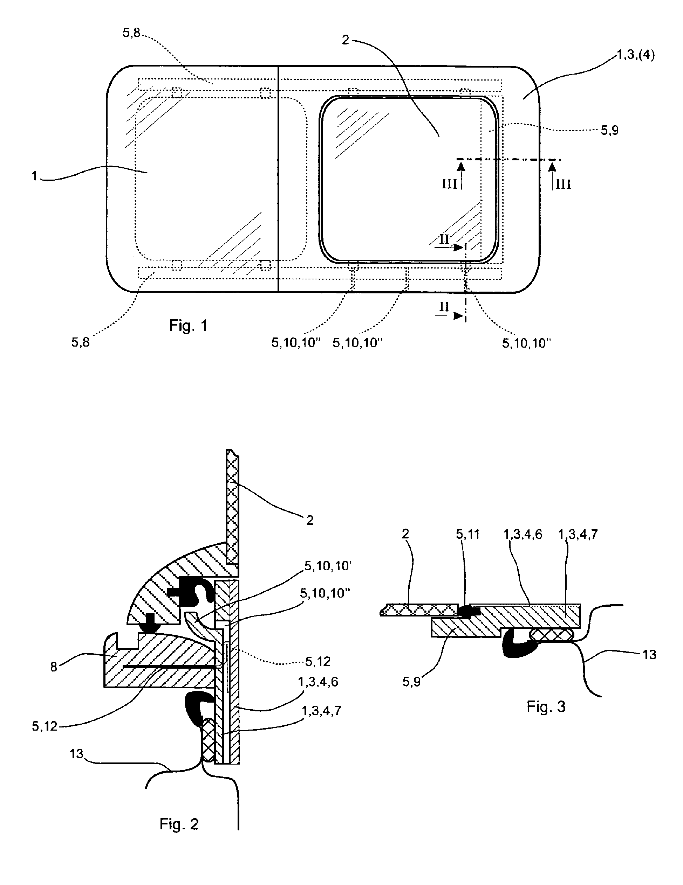

In Fig. 1 ist eine Schiebefensterbaugruppe in der Gesamtansicht dargestellt. Die Schiebefensterbaugruppe umfasst eine feststehende Platte 1, die eine linksseitig angeordnete Glasscheibe und ein rechtsseitig angeordnetes Rahmenmodul 3 aufweist, in das ein Schiebefenster 2 eingelassen ist. In Fig. 1 ist die Schiebefensterbaugruppe beispielhaft derart dargestellt, dass das Rahmenmodul 3 außenseitig bündig mit der linksseitig angeordneten Glasscheibe abschließt und das Schiebefenster 2 im geschlossenen Zustand vollumfänglich in das Rahmenmodul 3 eingelassen ist. Alternativ kann selbstverständlich auch auf die linksseitig angeordnete Glasscheibe verzichtet werden, so dass die feststehende Platte 1 ausschließlich von dem Rahmenmodul 3 gebildet ist. Auch das das Schiebefenster 2 vollumfänglich umgebende Rahmenmodul 3 kann alternativ so ausgestaltet sein, dass es das Schiebefenster 2 nur in den nicht der Glasscheibe zugewandten Randbereichen umgibt, so dass der der Glasscheibe zugewandte Randbereich des Schiebefensters 2 unmittelbar an die Glasscheibe angrenzt.

Der die Außenfläche des Rahmenmoduls 3 bildende Bestandteil ist von einer Rahmenplatte 4 gebildet, die hier etwa rechteckförmig mit an einer Seite abgerundeten Ecken und eine Ausnehmung für das Schiebefenster 2 aufweist. Insgesamt ist so eine weitestgehend glatte und optisch ebene Außenfläche der gesamten Schiebefensterbaugruppe gewährleistet. Glatt und optisch eben schließt selbstverständlich das Vorhandensein konstruktionsbedingter Spalte zwischen den einzelnen die Außenfläche bildenden Bauteilen nicht aus.

Zum Verschieben des Schiebefensters 2 wird dieses durch den Verschiebemechanismus aus der Außenflächenebene der Schiebefenstereinheit nach innen hin verschoben und auf der Innenseite der Schiebefensterbaugruppe entlang und im wesentlichen parallel zu dieser geführt. Die geöffnete Position ist der gestrichelten Darstellung zu entnehmen. Wird auf die linksseitig zum Rahmenmodul 3 angeordnete Glasscheibe verzichtet, wie es sich beispielsweise bei einem Schiebedach anbietet, wird das Schiebefenster 2 in bekannter Weise hinter der Karosserie geführt.

Einige Funktionselemente 5 sind in Fig. 1 gestrichelt dargestellt. So weist das Rahmenmodul 3 eine Diebstahlschutzleiste 9 auf, die das Schiebefenster 2 rückseitig umgreift, um das Eindrücken oder Aushebeln des Schiebefensters zu erschweren. Ferner sind neben einer oberen und einer unteren Führungsschiene 8 auch Wasserkanäle 10" gezeigt, durch die hindurch auf der Innenseite der Schiebefensterbaugruppe anfallende Flüssigkeit nach außen abgeleitet werden kann.

Fig. 2 zeigt eine Schnittansicht des unteren Bereichs der Schiebefensterbaugruppe. Das Schiebefenster 2 ist mittelbar über einen Gleitschuh in einer Führungsschiene 8 geführt. Die Führungsschiene 8 ist hier beispielhaft nicht als Funktionselement gezeigt, sonder vielmehr auf ein durch eine metallische Verstärkungseinlage 12 gebildetes Funktionselement 5,12 aufgesteckt, vorzugsweise aufgeklipst. Die Verstärkungseinlage ist mit einem ersten Bereich in einen zweiten Materialbereich 7 eingegossen und so unmittelbar an der Rahmenplatte 4 angeformt. Ein zweiter Bereich bildet die Verbindungsmöglichkeit mit der Führungsschiene 8. Die Führungsschiene 8 kann aber in einer anderen Ausgestaltung auch als Funktionselement ausgestaltet und selbst mit oder ohne Verstärkungseinlage 12 unmittelbar an die Rahmenplatte 4 angeformt sein.

Die Rahmenplatte 4 weist weiter ein Wassermanagementsystem auf, bei dem unterhalb einer Dichtlippe, die den Spalt zwischen Schiebefenster 2 und Rahmenmodul 3 nach innen abdichtet, eine Auffangrinne 10' angeordnet ist. Diese ist unmittelbar an den zweiten Materialbereich 7 der Rahmenplatte 4 angeformt und mit diesem einstückig verbunden. Gleichzeitig ist sind bei der in Fig. 1 dargestellten Schiebefensterbaugruppe drei Ablaufkanäle 10" innerhalb der Rahmenplatte 4 vorgesehen, die das in der Auffangrinne 10' gesammelte Wasser durch die Rahmenplatte 4 hindurch nach außen ableiten.

Die Rahmenplatte 4 weist in Fig. 2 neben einem ersten Materialbereich 6 einen zweiten Materialbereich auf. Der erste Materialbereich 6 in Fig. 3 ist gegenüber dem in Fig. 2 deutlich schmaler ausgeführt. Von Bedeutung ist die Erkenntnis, dass man mit einem äußeren ersten Materialbereich 6 und einem inneren zweiten Materialbereich 7 ein Werkstoffverbund erzielen kann, der den unterschiedlichen Anforderungen an die Fahrzeugaußenseite und an die Rahmenplatteninnenseite gerecht werden kann.

Die Schnittansicht des seitlichen Übergangsbereichs von Schiebefenster 2 und Rahmenmodul 3 in Fig. 3 zeigt als weitere Funktionselemente 5 eine Diebstahlschutzleiste 9 und eine in die Rahmenplatte 4 eingegossene und so unmittelbar an dieser angeformte Dichtung 11. Die Diebstahlschutzleiste 9 ist dabei einstückig mit der Rahmenplatte 4 verbunden und bildet so mit dieser eine besonders stabile Einheit. Auf das bisher übliche Aufkleben einer solchen Leiste wird verzichtet.

Das Rahmenmodul 3 in Fig. 2 und Fig. 3 ist über eine Klebstoffnaht dauerhaft mit der Fahrzeugkarosserie 12 verbunden. Die Rahmenplatte 4 kann selbstverständlich aus mehreren Teilplatten zusammengesetzt sein, die zusammengesetzt werden und jeweils einen Teil der Außenfläche der Schiebefensterbaugruppe bilden.

### Bezugszeichenliste

- 1: feststehendes Flächenelement
- 2: Schiebefenster
- 3: Rahmenmodul
- 4: Rahmenplatte
- 5: Funktionselement
- 6: erster Materialbereich
- 7: zweiter Materialbereich
- 8: Führungsschiene
- 9: Diebstahlschutzleiste
- 10: Mittel zum Auffangen von Wasser
- 10': Wasserauffangrinne
- 10": Wasserablaufkanäle
- 11: Dichtleisten
- 12: Verstärkungseinlage
- 13: Fahrzeugkarosserie

## Patentansprüche

1. Schiebefensterbaugruppe für ein Kraftfahrzeug, wobei
- die Schiebefensterbaugruppe zumindest ein feststehendes Flächenelement (1) und zumindest ein relativ zum feststehenden Flächenelement (1) bewegliches Schiebefenster (2) aufweist,
- das feststehende Flächenelement (1) zumindest zum Teil von einem Rahmenmodul (3) gebildet ist, das Rahmenmodul (3) zur Bildung der Außenfläche eine außenseitig angeordnete Rahmenplatte (4) aufweist, die zumindest an ihrer Außenseite aus einem Kunststoffmaterial hergestellt ist, und
- das Rahmenmodul (3) zumindest ein Funktionselement (5) aufweist, das an der Rahmenplatte (4) innenseitig oder randseitig angeordnet ist,
**dadurch gekennzeichnet, dass**
die Rahmenplatte (4) außenseitig einen ersten Materialbereich (6), vorzugsweise aus einem Glas imitierenden Kunststoffmaterial, und innenseitig zumindest einen zweiten Materialbereich (7) mit zum ersten Materialbereich (6) unterschiedlichen Werkstoffeigenschaften aufweist und das Funktionselement (5) unmittelbar an und/oder in der Rahmenplatte (4) angeformt ist.

2. Schiebefensterbaugruppe nach Anspruch 1, **dadurch gekennzeichnet, dass** das Schiebefenster (2) im geschlossenen Zustand außenseitig bündig in dem feststehende Flächenelement (1) unter Bildung einer weitestgehend glatten und optisch ebenen Außenfläche eingelassen ist.

3. Schiebefensterbaugruppe nach einem der beiden vorhergehenden Ansprüche, **dadurch gekennzeichnet, dass** die Rahmenplatte (4) des Rahmenmoduls (3) zumindest zum Teil als Werkstoffverbund oder als Verbundwerkstoff hergestellt ist.

4. Schiebefensterbaugruppe nach einem der vorhergehenden Ansprüche, **dadurch gekennzeichnet, dass** die Rahmenplatte (4) einen faserverstärkten Materialbereich aufweist.

5. Schiebefensterbaugruppe nach einem der vorhergehenden Ansprüche, **dadurch gekennzeichnet, dass** die Funktionselemente (5) an der Rahmenplatte (4) innenseitig oder randseitig angespritzt sind.

6. Schiebefensterbaugruppe nach einem der vorhergehenden Ansprüche, **dadurch gekennzeichnet, dass** die Funktionselemente (5) zumindest teilweise innerhalb der Rahmenplatte (4) angeordnet und von dem Material der Rahmenplatte (4) umgeben sind, insbesondere von dem Material der Rahmenplatte (4) umspritzt oder in diese einlaminiert sind.

7. Schiebefensterbaugruppe nach einem der vorhergehenden Ansprüche, **dadurch gekennzeichnet, dass** die Funktionselemente (5) zumindest teilweise aus einem gegenüber dem Kunststoffmaterial des ersten Materialbereichs (6) der außenseitigen Rahmenplatte (4) andersartigen zweiten Material mit unterschiedlichen Werkstoffeigenschaften gebildet ist.

8. Schiebefensterbaugruppe nach einem der vorgehenden Ansprüche, **dadurch gekennzeichnet, dass** die Funktionselemente (5) eine Führungsschiene (8) umfassen, in der das Schiebefenster (2) geführt ist.

9. Schiebefensterbaugruppe nach einem der vorhergehenden Ansprüche, **dadurch gekennzeichnet, dass** das Funktionselemente (5) eine Diebstahlschutzleiste (9) umfassen.

10. Schiebefensterbaugruppe nach einem der vorhergehenden Ansprüche, **dadurch gekennzeichnet, dass** die Funktionselemente (5) Mittel zum Ableiten von Wasser (10) umfassen.

11. Schiebefensterbaugruppe nach Anspruch 10, **dadurch gekennzeichnet, dass** die Mittel zum Ableiten von Wasser (10) eine sich entlang der Rahmenplatte horizontal erstreckende Auffangrinne (10') umfassen.

12. Schiebefenster nach Anspruch 10 oder 11, **dadurch gekennzeichnet, dass** die Mittel zum Ableiten von Wasser (10) in die Rahmenplatte integrierte Ablaufkanäle (10") umfassen.

13. Schiebefensterbaugruppe nach einem der vorhergehenden Ansprüche, **dadurch gekennzeichnet, dass** die Funktionselemente (5) Mittel zum Anzeigen von Informationen, insbesondere Leuchtmittelanzeigen, umfassen.

14. Schiebefensterbaugruppe nach einem der vorhergehenden Ansprüche, **dadurch gekennzeichnet, dass** die Funktionselemente (5) Dichtungen (11), insbesondere Dichtleisten, umfassen.

15. Rahmenmodul (3) für eine Schiebefensterbaugruppe nach einem der Ansprüche 1 bis 14, das zumindest einen Teil eines feststehenden Flächenelements (1) bildet, aufweisend
- eine außenseitig angeordnete Rahmenplatte (4) zur Bildung der Außenfläche, die zumindest an ihrer Außenseite aus einem Kunststoffmaterial hergestellt ist, und
- zumindest ein Funktionselement (5), das an der Rahmenplatte (4) innenseitig oder randseitig angeordnet ist,
**dadurch gekennzeichnet, dass**
die Rahmenplatte (4) außenseitig einen ersten Materialbereich (6), vorzugsweise aus einem Glas imitierenden Kunststoffmaterial, und innenseitig zumindest einen zweiten Materialbereich (7) mit zum ersten Materialbereich (6) unterschiedlichen Werkstoffeigenschaften aufweist und das Funktionselement (5) unmittelbar an und/oder in der Rahmenplatte (4) angeformt ist.

## Claims

1. Sliding window assembly for a motor vehicle, wherein
- the sliding window assembly has at least one stationary face element (1) and at least one sliding window (2) which can move relative to the stationary face element (1),
- the stationary face element (1) is formed at least partly from a frame module (3), the frame module (3) has an externally arranged frame plate (4) for forming the outer face, which frame plate is produced at least on its outer side from a plastic material, and
- the frame module (3) has at least one functional element (5) which is arranged on the inside or on the edge of the frame plate (4),
**characterised in that**
the frame plate (4) has on the outside a first material region (6), preferably consisting of a plastic material which imitates glass, and on the inside at least one second material region (7) with material properties which are different from the first material region (6), and the functional element (5) is moulded directly on and/or in the frame plate (4).

2. Sliding window assembly according to Claim 1, **characterised in that** the sliding window (2) in the closed state is let into the stationary face element (1) in an externally flush manner, forming a largely smooth and visually flat outer face.

3. Sliding window assembly according to one of the two preceding claims, **characterised in that** the frame plate (4) of the frame module (3) is produced at least partly as a composite or as a composite material.

4. Sliding window module according to one of the preceding claims, **characterised in that** the frame plate (4) has a fibre-reinforced material region.

5. Sliding window assembly according to one of the preceding claims, **characterised in that** the functional elements (5) are injection moulded on the inside or on the edge of the frame plate (4).

6. Sliding window assembly according to one of the preceding claims, **characterised in that** the functional elements (5) are arranged at least partly inside the frame plate (4) and are surrounded by the material of the frame plate (4), in particular encapsulated by the material of the frame plate (4) or laminated in the latter.

7. Sliding window assembly according to one of the preceding claims, **characterised in that** the functional elements (5) are formed at least partly from a different second material with different material properties compared to the plastic material of the first material region (6) of the external frame plate (4).

8. Sliding window assembly according to one of the preceding claims, **characterised in that** the functional elements (5) comprise a guide rail (8) in which the sliding window (2) is guided.

9. Sliding window assembly according to one of the preceding claims, **characterised in that** the functional elements (5) comprise a theft prevention bar (9).

10. Sliding window assembly according to one of the preceding claims, **characterised in that** the functional elements (5) comprise means for diverting water (10).

11. Sliding window assembly according to Claim 10, **characterised in that** the means for diverting water (10) comprise a collection channel (10') which extends horizontally along the frame plate.

12. Sliding window according to Claim 10 or 11, **characterised in that** the means for diverting water (10) comprise drainage ducts (10") which are integrated in the frame plate.

13. Sliding window assembly according to one of the preceding claims, **characterised in that** the functional elements (5) comprise means for displaying information, in particular illuminated displays.

14. Sliding window assembly according to one of the preceding claims, **characterised in that** the functional elements (5) comprise seals (11), in particular sealing strips.

15. Frame module (3) for a sliding window assembly according to one of Claims 1 to 14, which forms at least one part of a stationary face element (1), having
- an externally arranged frame plate (4) for forming the outer face, which frame plate is produced at least on its outer side from a plastic material, and
- at least one functional element (5) which is arranged on the inside or on the edge of the frame plate (4),
**characterised in that**
the frame plate (4) has on the outside a first material region (6), preferably consisting of a plastic material which imitates glass, and on the inside at least one second material region (7) with material properties which are different from the first material region (6), and the functional element (5) is moulded directly on and/or in the frame plate (4).

## Revendications

1. Ensemble de fenêtre coulissante pour un véhicule automobile,
- l'ensemble de fenêtre coulissante présentant au moins un élément de surface (1) fixe et au moins une fenêtre coulissante (2) mobile par rapport à l'élément de surface (1) fixe,
- l'élément de surface (1) fixe étant formé au moins en partie par un module de cadre (3), le module de cadre (3) pour la formation de la surface extérieure présentant une plaque de cadre (4) disposée côté extérieur, laquelle est fabriquée au moins sur son côté extérieur dans un matériau plastique, et
- le module de cadre (3) présentant au moins un élément de fonction (5), qui est disposé côté intérieur ou côté bordure sur la plaque de cadre (4),
**caractérisé en ce que**
la plaque de cadre (4) présente côté extérieur une première zone de matériau (6), de préférence à base d'un matériau plastique imitant le verre, et côté intérieur au moins une seconde zone de matériau (7) avec des propriétés de matériau différentes de la première zone de matériau (6) et l'élément de fonction (5) étant formé directement sur et/ou dans la plaque de cadre (4).

2. Ensemble de fenêtre coulissante selon la revendication 1, **caractérisé en ce que** la fenêtre coulissante (2) est emboîtée dans l'état fermé côté extérieur à fleur dans l'élément de surface (1) fixe en formant une surface extérieure largement lisse et plane au plan visuel.

3. Ensemble de fenêtre coulissante selon l'une quelconque des revendications précédentes, **caractérisé en ce que** la plaque de cadre (4) du module de cadre (3) est fabriquée au moins en partie sous forme d'assemblage de matériau ou de matériau composite.

4. Ensemble de fenêtre coulissante selon l'une quelconque des revendications précédentes, **caractérisé en ce que** la plaque de cadre (4) présente une zone de matériau renforcée de fibre.

5. Ensemble de fenêtre coulissante selon l'une quelconque des revendications précédentes, **caractérisé en ce que** les éléments de fonction (5) sont appliqués par projection côté intérieur ou côté bordure sur la plaque de cadre (4).

6. Ensemble de fenêtre coulissante selon l'une quelconque des revendications précédentes, **caractérisé en ce que** les éléments de fonction (5) sont disposés au moins en partie à l'intérieur de la plaque de cadre (4) et sont entourés par le matériau de la plaque de cadre (4), en particulier sont enrobés par le matériau de la plaque de cadre (4) ou sont stratifiés à l'intérieur dans cette plaque.

7. Ensemble de fenêtre coulissante selon l'une quelconque des revendications précédentes, **caractérisé en ce que** les éléments de fonction (5) sont formés au moins en partie dans un second matériau différent par rapport au matériau plastique de la première zone de matériau (6) de la plaque de cadre (4) côté extérieur et présentant différentes propriétés de matériau.

8. Ensemble de fenêtre coulissante selon l'une quelconque des revendications précédentes, **caractérisé en ce que** les éléments de fonction (5) comprennent un rail de guidage (8) dans lequel la fenêtre coulissante (2) est guidée.

9. Ensemble de fenêtre coulissante selon l'une quelconque des revendications précédentes, **caractérisé en ce que** les éléments de fonction (5) comprennent une baguette antivol (9).

10. Ensemble de fenêtre coulissante selon l'une quelconque des revendications précédentes, **caractérisé en ce que** les éléments de fonction (5) comprennent des moyens pour la déviation de l'eau (10).

11. Ensemble de fenêtre coulissante selon la revendication 10, **caractérisé en ce que** les moyens pour la déviation de l'eau (10) comprennent une rigole collectrice (10') s'étendant horizontalement le long de la plaque de cadre.

12. Fenêtre coulissante selon la revendication 10 ou 11, **caractérisé en ce que** les moyens pour la déviation de l'eau (10) comprennent des canaux d'écoulement (10") intégrés dans la plaque de cadre.

13. Ensemble de fenêtre coulissante selon l'une quelconque des revendications précédentes, **caractérisé en ce que** les éléments de fonction (5) comprennent des moyens pour l'affichage d'informations, en particulier des affichages lumineux.

14. Ensemble de fenêtre coulissante selon l'une quelconque des revendications précédentes, **caractérisé en ce que** les éléments de fonction (5) comportent des joints (11), en particulier des baguettes d'étanchéité.

15. Module de cadre (3) pour un ensemble de fenêtre coulissante selon l'une quelconque des revendications 1 à 14, qui forme au moins une partie d'un élément de surface (1) fixe, présentant
- une plaque de cadre (4) disposée côté extérieur pour la formation de la surface extérieure, laquelle est fabriquée au moins sur son côté extérieur à base d'un matériau plastique, et
- au moins un élément de fonction (5), qui est disposé côté intérieur ou côté bordure sur la plaque de cadre (4),
**caractérisé en ce que**
la plaque de cadre (4) présente côté extérieur une première zone de matériau (6), de préférence à base d'un matériau plastique imitant le verre, et côté intérieur au moins une seconde zone de matériau (7) avec des propriétés de matériau différentes par rapport à la première zone de matériau (6) et l'élément de fonction (5) est formé directement sur et/ou dans la plaque de cadre (4).
